# FASCICULE DE BREVET EUROPEEN

(11) **EP 1 724 665 B1**
(45) Date de publication et mention de la délivrance du brevet: **25.06.2008**
(21) Numéro de dépôt: 06113913.5
(22) Date de dépôt: 15.05.2006
(51) Int. Cl.: G06F 3/033, H04N 5/445

(54) **Procédé de sélection d'éléments et de functions par affichage d'une icone spécifique, et appareil mettant en oeuvre le procédé**
Verfahren zur Auswahl von Elementen und Funktionen durch Anzeige eines spezifischen Ikons und Apparat zum Durchführen dieses Verfahrens
Method for selecting items and functions by displaying a specific icon and apparatus for carrying out this method

(30) Priorité: 19.05.2005 FR 0551296
(43) Date de publication de la demande: 22.11.2006
(73) Titulaire: Thomson Licensing, 92100 Boulogne-Billancourt (FR)
(72) Inventeur: Querre, Goulven, 92648 BOULOGNE CEDEX (FR)
(74) Mandataire: Le Dantec, Claude

(56) Documents cités:
- WO-A-01/43424
- WO-A-01/44896
- US-A- 5 297 253
- US-A- 5 353 219
- US-A- 5 721 853
- US-A- 6 011 550
- US-A- 6 052 145
- US-B1- 6 766 526

## Description

L'invention concerne un procédé de sélection d'éléments d'une liste affichée sur un écran de visualisation et un appareil muni d'une interface utilisateur utilisant le procédé.

Une interface utilisateur (U.I. en abrégé) est la combinaison d'au moins un moyen de réception de commandes et d'au moins un moyen d'affichage. Une U.I. utilise généralement des données descriptives pour élaborer des menus susceptibles d'être affichés sur un écran de télévision. Ces données permettent entre autres d'élaborer des listes d'éléments que l'utilisateur peut sélectionner. La norme MPEG-7 spécifie des données descriptives associées à des contenus audiovisuels. La norme MPEG-7 est accessible par l'ISO sous la référence ISO/IEC JTC1/SC29/WG11 - N5525 éditée en mars 2003. Si ces données proviennent d'un réseau de diffusion, elles peuvent être mémorisées dans une base de données locale et constamment mise à jour en fonction des contenus diffusés par le réseau. D'autres données descriptives existent, également lues à partir de supports tels que des CD, ou DVD. De façon générale, les données descriptives sont enregistrées dans une base de données de la mémoire d'un récepteur, et regroupées par des listes selon certains critères tels que : les titres des programmes diffusés, les canaux de diffusion, les thèmes de programmes, les langues disponibles, etc. D'autres listes peuvent aussi être élaborées par le récepteur lui-même, des listes de fonctions par exemple.

Certaines listes sont accessibles à l'aide d'un Guide électronique de Programme (EPG en abrégé) s'affichant sur un écran. L'EPG récupère des éléments de la liste à partir d'un réseau de diffusion par exemple et se charge d'afficher dans une case un identificateur de l'élément. Les cases sont disposées verticalement, ou horizontalement, ou encore dans une grille. L'utilisateur navigue dans les listes affichées à l'aide des touches de navigation disposées sur une télécommande. Si les cases sont disposées horizontalement, alors l'utilisateur navigue dans la liste en utilisant les touches « flèche à droite » ou « flèche à gauche ». Lorsqu'une case est mise graphiquement en évidence, l'élément associé à cette case est sélectionné. D'autres touches permettent d'exécuter des fonctions appliquées à cet élément, par exemple si l'élément est un programme audiovisuel, les fonctions exécutables peuvent être sa visualisation, son enregistrement ou encore son association avec un texte par exemple, etc. Dans certain EPG, les cases associées aux éléments sélectionnables sont disséminées à l'écran, soit au sein d'une liste structurée, soit isolément. L'utilisateur peut avoir des difficultés pour sélectionner rapidement l'élément qu'il souhaite car à partir d'un élément donné, le choix de la touche de navigation à utiliser ne lui apparaît pas clairement.

Le document WO01/43424 - UNITED VIDEO PROPERTIES décrit l'affichage de menu formant des listes disposées verticalement. Au début et à la fin de la liste, des icônes accessibles par des commandes de navigation indiquent qu'il existe d'autres items qui seraient affichés en continuant à naviguer dans cette direction. Par exemple, la figure 28 et le texte correspondant montrent l'affichage d'une liste favorite, l'affichage d'une liste favorite est déclenchée par sélection d'une icône dans la zone d'icône de la figure 16. Dans la figure 28, l'icône qui apparaît au dessus d'une liste d'élément permet une fonction de tri appliquée sur la liste en dessous de cette icône. Ce document enseigne l'accès à un seul ensemble de fonctions à partir d'une icône supplémentaire.

La liste affichée peut comporter un grand nombre d'éléments. Une solution bien connue consiste à implémenter deux touches de saut de page en avant et en arrière. Mais cela oblige à augmenter le nombre de touches ce qui augmente le coût de la télécommande.

Le document US 5721853 - SMITH décrit un menu apparaissant sur un écran. A la figure 2, on voit un cercle divisée en quatre quadrants, chaque quadrant étant associé à une suite de titres tels que « Tool Bar », « Ask AST », « Folders », « S/W Suites ».) formant une liste d'éléments. En positionnant l'index de la souris sur un quadrant, un sous menu s'affiche montrant des éléments accessibles à partir de ce quadrant. L'utilisateur peut régler une temporisation entre le moment où l'index est positionné sur l'icône central et le, moment où apparaît le cercle.

Le document US 5 297 253 - Meisel - Ehrlich Associates décrit un menu de navigation affiché sur un écran permettant de visualiser des éléments d'informations sur une zone. Des icônes permettent la sélection, des éléments d'informations présentés en affichant une arborescence à plusieurs niveaux. Un index permet dé sélectionner l'icône correspondant à la commande à exécuter. Des icônes « Next » and « Previous » permettent d'avancer en avant et en arrière dans la liste d'éléments. Lorsque le début de la liste est atteint, l'lcône permettant de naviguer en arrière devient inactif et change de couleur.

Le document US6766526 - ELLIS décrit une navigation dans une liste de chaînes en introduisant un numéro de chaînes par le clavier numérique de la télécommande. Suite à l'introduction des premiers chiffres, une liste de numéros de chaînes apparaît en présentant tous les numéros dont les premiers chiffres sont identiques à ceux introduits. Une icône apparaît pour indiquer que la liste affichée est incomplète et que d'autres numéros dont les premiers chiffres sont identiques à ceux introduits existent aussi mais ne sont pas affichés.

Outre les fonctionnalités qu'elle procure, la télécommande constitue un élément important de l'esthétisme d'un système audiovisuel. Selon les modes, elles comportent plus ou moins de touches, et ces touches sont de formes diverses. II peut être intéressant d'élaborer de nouvelles formes de télécommande aux lignes épurées et dont le nombre ou la forme des touches suscite un intérêt pour l'utilisateur.

La présente invention présente une nouvelle manière de sélectionner un élément au sein d'une liste ou d'une fonction, avec des moyens de réception de commandes limités et peu coûteux.

L'invention a pour objet un procédé de sélection d'éléments et de fonctions tel qu'indiqué dans la revendication 1.

De cette façon l'utilisateur peut facilement sélectionner un élément et activer des fonctions de types différents à l'aide d'une télécommande comportant un nombre minimum de touches. Grâce à la temporisation, l'utilisateur peut avoir accès à des fonctions en utilisant les mêmes commandes de navigation. Compte tenu du nombre réduit de touches nécessaires à de telles opérations, l'utilisateur n'a plus besoin de les chercher sur sa télécommande. II peut ainsi naviguer dans des menus affichés en regardant constamment l'écran, ce qui est plus efficace et plus rapide.

Selon un premier perfectionnement, le procédé comporte une étape d'affichage d'un menu présentant une pluralité de fonctions modifiant la liste d'éléments. L'affichage de ce menu est déclenché lorsque l'icône supplémentaire est mise en évidence et après la temporisation. De cette manière, en sélectionnant l'icône supplémentaire, l'utilisateur a accès à de nouvelles fonctions.

Selon un autre perfectionnement, le procédé comporte une étape d'exécution d'un saut de page déclenchée par une nouvelle commande de validation, accessible lorsqu'une icône supplémentaire est mise en évidence et sans qu'il y ait besoin d'attendre la temporisation. Une fois le saut de page effectué, l'icône supplémentaire reste mise en évidence. De cette façon, l'utilisateur effectue des sauts de pages en activant successivement le second moyen de réception. Selon un perfectionnement, l'icône supplémentaire mise en évidence disparaît lorsque l'extrémité de page est atteinte. De cette façon, l'utilisateur voit immédiatement qu'il a atteint une extrémité de la liste. Selon un autre perfectionnement, deux icônes supplémentaires sont affichées pour effectuer des sauts de page en avant et en arrière. La disparition d'une des deux icônes supplémentaires lorsque l'extrémité de liste est atteinte déclenche la mise en évidence de l'autre icône. De cette façon, l'utilisateur peut immédiatement repartir dans l'autre sens que celui avec lequel il vient d'atteindre une extrémité de la liste.

Selon un autre perfectionnement, le procédé insère automatiquement une icône supplémentaire entre un nombre déterminé d'icônes représentant des éléments. De cette manière, l'utilisateur dispose d'endroits en endroits d'icônes supplémentaires lui donnant accès à des fonctions supplémentaires pour changer la liste dans lequel il est en train de naviguer.

L'invention concerne également un appareil électronique permettant de mettre en oeuvre le procédé décrit par la revendication 1 tel qu'indiqué dans la revendication 6.

D'autres caractéristiques et avantages de l'invention apparaîtront maintenant avec plus de détails dans le cadre de la description qui suit d'exemples de réalisation donnés à titre illustratif en se référant aux figures annexées qui représentent :
- la figure 1a est un diagramme bloc d'un dispositif de visualisation pour la mise en oeuvre d'un exemple de réalisation de l'invention,
- la figure 1b présente une télécommande selon un exemple préféré de réalisation de la présente invention,
- la figure 2 présente un exemple d'une apparence d'écran comprenant une liste d'éléments dont l'un est mis en évidence et des WildCard,
- la figure 3 présente un exemple d'une apparence d'écran comprenant une liste d'éléments dont l'un est mis en évidence, des WildCard et un sous-menu appliqué à l'élément mis en évidence,
- les figures 4 et 5 présentent deux exemples d'une apparence d'écran comprenant une liste d'éléments, et des WildCard dont l'un est mis en évidence,
- la figure 6 présente un exemple d'une apparence d'écran comprenant une liste d'éléments, des WildCard dont l'un est mis en évidence, et un sous-menu associé à un WildCard mis en évidence,
- la figure 7 présente un autre exemple d'une apparence d'écran comprenant une liste d'éléments dont l'un est mis en évidence, des WildCard et un sous-menu appliqué à l'élément mis en évidence accessible à partir d'une touche de fonction.

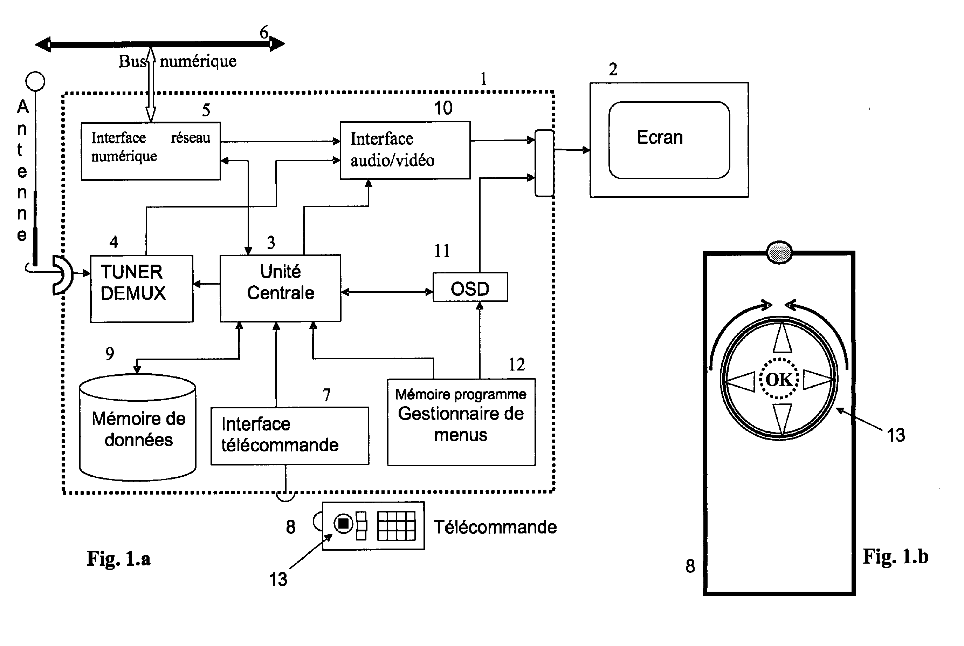

A l'aide de la figure 1, on décrit tout d'abord la structure d'un récepteur multimédia 1 muni d'un dispositif d'affichage 2 selon un exemple de réalisation de l'invention. Le récepteur est par exemple un décodeur. D'autres appareils sont également utilisables pour la présente invention, par exemple un ordinateur personnel ou un PVR, ou tout appareil capable d'accéder à des contenus audiovisuels et disposant de moyens de création et d'affichage de menus. Le récepteur comprend une unité centrale 3 reliée à une mémoire de programme 12, et une interface 5 pour la communication avec un bus numérique à haut débit 6 permettant de transmettre des données audio/vidéo en temps réel. Ce réseau est de préférence public et permet d'accéder à des serveurs distants, le plus courant est le réseau IP. Le récepteur peut également recevoir des données audio/vidéo d'un réseau de diffusion à travers une antenne de réception associée à un démodulateur 4. Le récepteur comprend en outre un récepteur de signaux infrarouge 7 pour recevoir les signaux d'une télécommande 8, une mémoire 9 pour le stockage de contenus audiovisuels et d'une base de données, et une logique de décodage audio/vidéo 10 pour la génération des signaux audiovisuels envoyés à l'écran de télévision 2. La télécommande peut être remplacée par tout moyen de réception de commandes disponible sur une des faces de l'appareil. La mémoire 9 est avantageusement un disque dur de plusieurs centaines de méga-octets, permettant d'enregistrer plusieurs heures au moins de contenus audiovisuels. Ces contenus audiovisuels sont identifiés par un titre enregistré dans la base de donnée.

La télécommande 8 comporte des touches de navigation : ←, ↑, →, ↓, et au moins des touches de fonction tel que « OK » et « LIST », et éventuellement un pavé numérique pour l'introduction de valeur. Une variante consiste en ce que la télécommande comporte une touche principale 13 dotée de plusieurs mouvements de liberté avec éventuellement quelques touches supplémentaires. Cette touche principale 13 peut tourner à gauche et à droite jusqu'à une valeur maximale d'angle, elle peut également être enfoncée. A elle seule, cette touche peut remplacer des touches telles que ↑, ↓ et « OK ».

La figure 1b décrit une télécommande 8 dotée d'une unique touche 13 possédant sept mouvements de liberté. Un tel bouton est décrit dans la demande de brevet de la société TELENOSTRA WO 02/31641. La touche 13 peut être enfoncée comme un bouton poussoir, elle peut aussi être tournée à droite et à gauche comme un rotacteur, elle peut aussi être basculée vers le haut, vers le bas, à droite et à gauche comme un « joystick ». Cela permet à un utilisateur d'introduire au plus sept commandes différentes. Le mouvement « enfoncé » est avantageusement affecté à la fonction de validation, une sérigraphie « OK » peut être marquée au centre de la touche 13. Il s'est avéré que le coté esthétique d'une telle télécommande a séduit un grand nombre d'utilisateurs. De plus, le nombre réduit de touches permet à l'utilisateur de ne pas avoir à rechercher laquelle appuyer et ainsi de manipuler sa télécommande en regardant constamment l'écran.

Le récepteur 1 comprend également un circuit 11 d'affichage de données sur l'écran, appelé souvent circuit OSD, de l'Anglais "On Screen Display" (signifiant littéralement "affichage sur l'écran"). Le circuit OSD 11 est un générateur de texte et de graphisme qui permet d'afficher à l'écran des menus, des pictogrammes (par exemple, un numéro correspondant à la chaîne visualisée) et qui permet d'afficher les menus de navigation conformément à la présente invention, et notamment une ou plusieurs barres de boutons. Le circuit OSD 11 est contrôlé par l'Unité Centrale 3 et le gestionnaire de menus 12. Le gestionnaire de menus 12 est avantageusement réalisé sous la forme d'un module de programme enregistré dans une mémoire morte. II peut aussi être réalisé sous la forme d'un circuit spécialisé de type ASIC par exemple.

Le bus numérique 6 et/ou le réseau de diffusion transmettent au récepteur des données comprenant des contenus multimédias et des données descriptives de ces contenus. Ces données proviennent soit d'un réseau de diffusion, soit du réseau numérique 6. Les données descriptives comprennent des éléments de classification appelés « attributs », des contenus multimédias accessibles. Les données descriptives sont par exemple des méta-données (ou « metadata » en Anglais) définies selon le standard MPEG7. Ces données sont stockées dans la base de données de la mémoire 9 du récepteur et sont continuellement mises à jour. Le gestionnaire de menus 12 extrait les informations de cette base de données et les traite pour réaliser des menus de navigation affichés à l'écran, notamment un ou plusieurs barres de boutons.

Selon un exemple préféré de réalisation, le gestionnaire de menus 12 affiche une liste d'éléments à la demande de l'utilisateur. Le gestionnaire de menu 12 peut être intégré dans une application telle qu'un Guide Electronique de Programme (EPG en abrégé). La fonction du gestionnaire de menus est d'afficher des listes d'éléments et de les mettre à jour suite à l'introduction de commande par l'utilisateur.

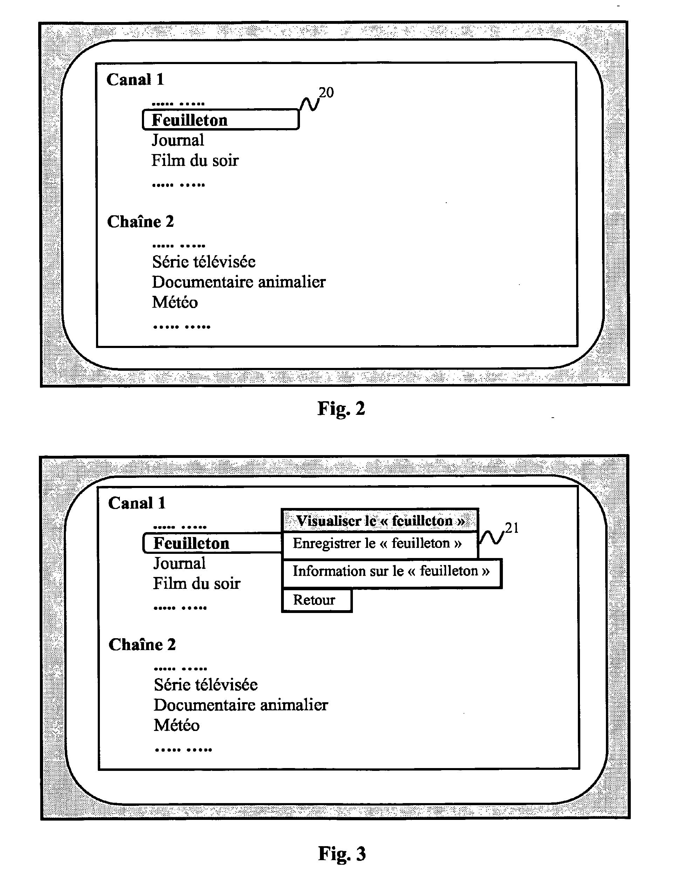

La figure 2 montre un exemple d'apparence d'écran présentant une liste d'éléments, dans l'exemple une liste de programmes actuellement diffusés. Chaque élément est représenté par une icône qui l'identifie, par exemple une case contenant un titre. L'apparence d'écran présente deux pages de programmes diffusés par deux canaux « Canal 1 » et « Chaîne 2 ». Dans l'exemple, la page comporte 3 titres. L'icône représentant le premier programme de la première page est mis en évidence par un contour. Le premier et le dernier icône (20) de la page n'identifient pas des programmes mais constitue un élément graphique sélectionnable appelé en anglais « WildCard ». Dans l'exemple de la figure 2, un WildCard 20 est représenté par une suite de points. La présence d'un WildCard 20 dans une liste affichée indique à l'utilisateur que cet élément est sélectionnable et qu'en le sélectionnant, cela lui donne accès à de nouvelles fonctions.

Dans un premier temps, supposons que l'utilisateur positionne le focus sur le premier programme de la première liste et appuie sur la touche OK. Cet élément est alors considéré comme activé ce qui déclenche sa visualisation. Si c'est une liste de stations de radio qui est affiché, alors l'activation déclenche l'écoute de la station préalablement sélectionnée. Si c'est une liste de programmes exécutables, l'activation entraîne l'exécution du programme sélectionné. De façon générale, tout élément de la liste qui n'est pas un WildCard subit un traitement qui lui est propre, et qui n'affecte pas le reste de la liste. Avantageusement, lorsque l'utilisateur reste quelques secondes sur un élément, la liste des actions exécutables sur un élément apparaît dans un sous-menu 21, comme le montre la figure 3. Par exemple, le menu fait apparaître les trois actions : visualiser, enregistrer, donner des informations sur l'élément sélectionné. Au sein de ce sous-menu 21, l'utilisateur peut naviguer avec les touches : ↑, ↓, et valider par la touche « OK » déclenchant ainsi l'exécution de l'action sélectionnée. Si l'utilisateur ne désire lancer aucune action, il déplace le focus dans la dernière ligne marquée « Retour » ce qui fait disparaître le menu et fait revenir l'apparence d'écran comme le montre la figure 2.

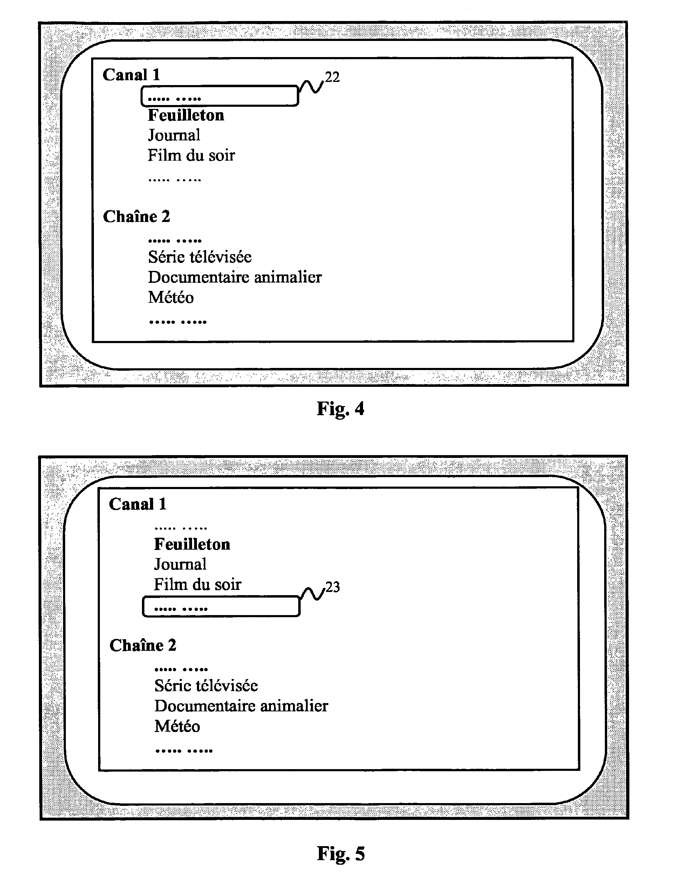

La figure 4 montre un exemple d'apparence d'écran où l'utilisateur met en évidence le WildCard 20 qui se trouve en haut de la liste. Les fonctions accessibles lorsqu'un WildCard 20 est mis en évidence concernent l'ensemble de la liste. La première fonction consiste à effectuer un saut de page, les trois éléments de la liste affichée sont alors remplacés par les trois éléments précédents. Le focus 22 reste sur le WildCard en haut de la liste, de sorte qu'un nouvel appui sur « OK » fait afficher une nouvelle page précédente. Lorsque le début de liste est atteint, alors le WildCard en haut de liste disparaît, mais pas le WildCard en bas de liste sur lequel avantageusement le focus 20 peut être positionné. Comme le montre la figure 5, l'utilisateur peut aussi naviguer vers le bas en mettant le focus 23 sur le WildCard en bas de la liste. En appuyant successivement sur la touche « OK », l'utilisateur fait défiler les pages vers la fin de la liste d'éléments, le focus 23 restant sur le WildCard du bas de la liste.

Avantageusement, lorsqu'en activant successivement le WildCard en haut de la liste affichée, le début de la liste d'élément est atteint, alors le WildCard en haut de liste disparaît et le WildCard en bas de liste est automatiquement mis en évidence. De cette manière, l'utilisateur peut immédiatement repartir dans une recherche dans l'autre sens.

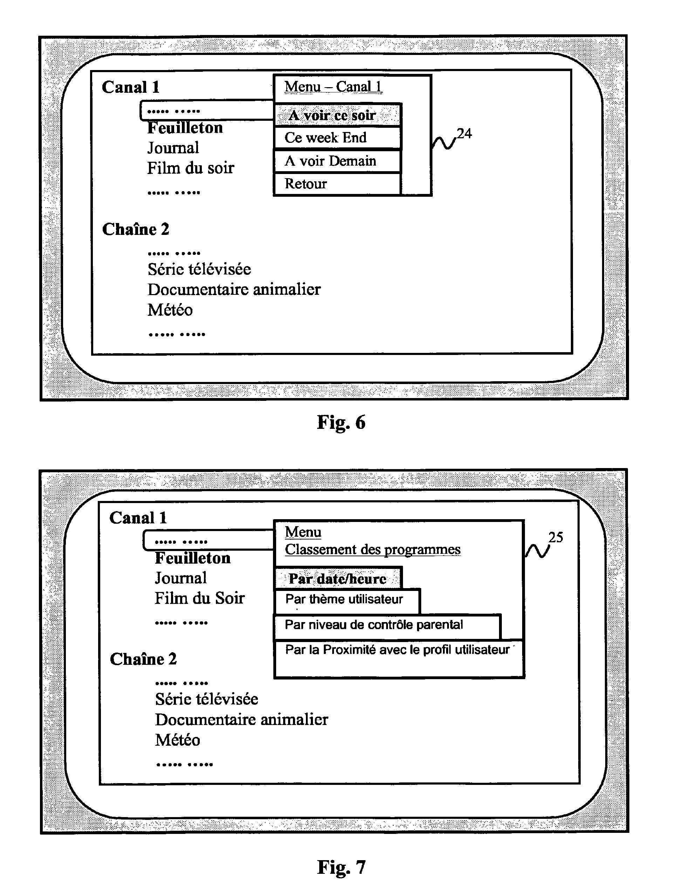

D'autres fonctions sont accessibles à partir d'un WildCard. Si l'utilisateur appuie immédiatement sur « OK » après avoir mis en évidence le WildCard en haut de sous-liste, alors un saut de page vers le haut est exécuté. Mais si l'utilisateur laisse quelques secondes le focus sur un WildCard sans actionner de touches, une liste des fonctions exécutables apparaît dans un sous-menu 24, comme le montre la figure 6. Par exemple, le sous-menu fait apparaître les éléments « A voir ce soir », « Ce Week end » et « A voir demain ». Ces fonctions permettent de fournir une autre liste de programmes diffusés par le même canal et donne l'accès à des programmes qui seront visualisés plus tard. Au sein de ce sous-menu 24, l'utilisateur peut naviguer avec les touches ↑, ↓ et valider par la touche « OK », ce qui déclenche l'exécution de la fonction sélectionnée et modifie complètement la sous-liste affichée. Si finalement, l'utilisateur ne désire lancer aucune fonction, il déplace le focus dans la dernière ligne marquée « Retour » ce qui fait disparaître le menu et fait revenir l'apparence d'écran comme le montre la figure 4.

Selon les précédents exemples de réalisation illustrés par les figures 2 à 5, on voit que l'utilisateur peut naviguer, lancer des actions sur les éléments ou lancer des fonctions applicables à la liste en utilisant uniquement la touche 13 dotée d'au moins trois mouvements de liberté. La présence de WildCard autorise l'accès à des fonctions différentes de celles accessibles à partir de l'identifiant graphique d'un élément de la liste. De plus, selon la position de la WildCard au sein de la liste affichée, les fonctions accessibles ne sont pas les mêmes.

Selon une variante, la télécommande 8 dispose de plusieurs touches de fonction : «OK» «F1», «F2», ... «Fi». Selon que l'élément mis en évidence est un WildCard ou non, l'appui sur la touche « Fi » déclenche un effet différent. Si un élément de liste possède le focus, l'appui sur « OK » déclenche sa visualisation, l'appui sur F1 fait apparaître le sous-menu de la Figure 3. Si le WildCard en haut de la liste possède le focus, l'appui sur « OK » déclenche un saut de page vers le haut, l'appui sur F1 fait apparaître le sous-menu de la Figure 6. L'appui sur F2 fait apparaître le sous-menu 25 illustré par la figure 7. Le sous-menu 25 permet de réorganiser la liste affichée selon de nouveaux critères. On peut ainsi trier les éléments de liste par date et heure, par thème, par niveau de contrôle parental, par indice de proximité avec le profil utilisateur, etc. Une touche Fi peut avantageusement exécuter la même commande que la touche « Retour » ce qui fait disparaître le menu et fait revenir l'apparence d'écran comme le montre la figure 5. L'option « Retour » n'est alors plus accessible par les sous-menu 24 et 25.' L'appui d'une autre touche Fi fait apparaître une liste d'attributs permettant d'afficher une nouvelle liste de programmes correspondant à un attribut sélectionné, par exemple l'attribut sélectionné est documentaire animalier et son activation déclenche l'affichage de la liste de tous les programmes de documentaire animalier diffusé sur ce canal.

Selon un perfectionnement, un WildCard n'est pas uniquement placé en début ou en fin de liste mais peut être disposé par le gestionnaire de menu 12 à n'importe quel endroit de la liste affichée. Si la page affichée comporte beaucoup d'éléments, il est préférable d'insérer un WildCard tous les 10 éléments par exemple. De cette manière, de n'importe quel endroit de la page, l'utilisateur n'a besoin que de cinq commandes de navigation pour atteindre un WildCard (soit vers le haut, soit vers le bas) et avoir ainsi accès aux fonctions supplémentaires apportées par le WildCard.

Selon les exemples précédents, un WildCard est représenté sous la forme d'une suite de points. D'autres représentations sont possibles comme par exemple un segment horizontal, un rectangle vide, ou tout autre symbole affichable que le gestionnaire de menu peut graphiquement mettre en évidence. La forme d'un WildCard doit pouvoir informer l'utilisateur de la présence d'un élément sélectionnable qui va pouvoir lui donner accès à des fonctions supplémentaires.

Bien que la présente invention ait été décrite en référence aux modes de réalisation particuliers illustrés, celle-ci n'est nullement limitée par ces modes de réalisation, mais ne l'est que par les revendications annexées.

## Revendications

1. Procédé de sélection d'éléments et de fonctions d'une liste affichée sur un écran de visualisation, chaque élément étant identifié par une icône affichée dans une suite d'icônes représentant un sous-ensemble d'une liste ordonnée d'éléments, comportant une étape de sélection d'un élément déclenchée par la réception d'une première commande (8,13) de déplacement d'un curseur de sorte que l'icône associée est mise graphiquement en évidence, et une étape d'exécution d'une fonction appliquée à l'élément sélectionné déclenchée par la réception d'une seconde commande (8,13) de validation;
**caractérisé en ce qu'**il comporte, de surcroît,
- une étape d'affichage de deux icônes supplémentaires (20) associées chacune à une fonction de saut de page et au moins une autre fonction supplémentaire concernant l'ensemble de la liste affichée, chacune des deux icônes étant placée à chaque extrémité du sous-ensemble d'éléments affichés,
- une étape de mise en évidence d'une des icônes supplémentaires (20) déclenchée par la réception d'une troisième commande de déplacement du curseur,
- une étape d'affichage et de mise en évidence de l'identificateur d'au moins une desdites fonctions supplémentaires associées à l'icône supplémentaire (20) au bout d'une durée déterminée au cours de laquelle aucune autre commande n'est reçue,
- si une quatrième commande de validation est reçue avant la fin de la durée déterminée, alors une page contenant un nouveau sous-ensemble d'éléments est affichée, et si le nouveau sous-ensemble contient l'élément en début ou l'élément en fin de liste, alors l'icône supplémentaire mise en évidence disparaît et l'autre icône supplémentaire est mise en évidence.

2. Procédé selon la revendication 1, **caractérisé en qu'**il comporte une étape d'affichage d'un menu présentant une pluralité de fonctions modifiant le sous-ensemble d'éléments

3. Procédé selon la revendication 1, **caractérisé en que** consécutivement à la réception de la commande de validation, l'icône supplémentaire reste mis en évidence permettant d'effectuer un saut de page en recevant une nouvelle commande de validation.

4. Procédé selon l'une quelconque des revendications précédentes, **caractérisé en que** l'icône supplémentaire (20) sélectionnée disparaît lorsque, après la réception d'une commande de validation, l'élément à une extrémité de la liste est sélectionné.

5. Procédé selon l'une quelconque des revendications précédentes, **caractérisé en que** l'étape d'affichage comporte l'insertion d'une icône supplémentaire (20) entre un nombre déterminé d'icônes identifiant des éléments.

6. Appareil électronique (1) comprenant un moyen pour élaborer un signal d'affichage (3, 11, 12) sur un écran de visualisation d'une suite d'icônes représentant un sous-ensemble d'une liste ordonnée d'éléments, chaque élément étant identifié par une icône affichée, un moyen de réception d'une commande de déplacement d'un curseur (8,13) déclenchant la sélection d'un élément en mettant graphiquement en évidence l'icône de l'élément identifié et un moyen de déclenchement de l'exécution d'une fonction appliquée uniquement à l'élément sélectionné ;
**caractérisé en ce qu'**il comporte, de surcroît,
un moyen pour élaborer un signal d'affichage (3, 11, 12) de deux icônes supplémentaires (20) associées chacune à une fonction de saut de page et au moins une autre fonction supplémentaire concernant l'ensemble de la liste affichée, chacune des deux icônes étant placée à chaque extrémité du sous-ensemble d'éléments affichés,
le moyen de réception d'une commande de déplacement du curseur (8,13) contrôlant le moyen d'élaboration d'un signal d'affichage (3, 11, 12) pour mettre en évidence une des icônes supplémentaires et pour afficher et mettre en évidence un identificateur d'une desdites fonctions supplémentaires associées à l'icône supplémentaire (20) au bout d'une durée déterminée au cours de laquelle aucune autre commande n'est reçue, le moyen de réception d'une commande (8,13) contrôlant également un moyen d'exécution de la fonction dont l'identificateur est mis en évidence,
le moyen de réception d'une commande (8,13) déclenchant lorsqu'une commande de validation est reçue au cours de la durée déterminée l'affichage d'une page contenant un nouveau sous-ensemble d'éléments, et si le nouveau sous-ensemble contient l'élément en début ou l'élément en fin de liste, alors le moyen d'élaboration d'un signal d'affichage (3, 11, 12) fait disparaître l'icône supplémentaire mise en évidence et met en évidence l'autre icône supplémentaire.

7. Appareil électronique (1) selon la revendication 6 ; **caractérisé en ce que** le moyen d'élaboration d'un signal d'affichage (3, 11, 12) maintient graphiquement en évidence l'icône supplémentaire après la réception de la commande, permettant d'effectuer un nouveau saut de page à chaque réception d'une nouvelle commande.

8. Appareil électronique (1) selon l'une quelconque des revendications 6 ou 7 ; **caractérisé en ce que** le moyen d'élaboration d'un signal d'affichage (3, 11, 12) insère une icône supplémentaire (20) entre un nombre déterminé d'icônes identifiant des éléments.

## Claims

1. Method of selecting items and functions from a list displayed on a display screen, each item being identified by an icon displayed in a series of icons representing a sub-set of a list of ordered items, comprising a step of selecting an item triggered by the reception of a first command (8, 13) to move the curser so that the associated icon is graphically highlighted, and a step of executing a function applied to the selected item triggered by the reception of a second command (8, 13)of validation,
**characterized in that** it furthermore comprises,
- a step of displaying two additional icons (20) each associated with a page jump function and at least one additional function concerning the displayed list set, each of the two icons being placed at each end of the sub-set of displayed items,
- a step of highlighting one of the additional icons (20) triggered by the reception of a third command of moving the curser,
- a step of displaying and highlighting of the identifier of at least one of the said additional functions associated with the additional icon (20) following a specified period during which no other command is received,
- if a fourth command of validation is received before the end of the specified period, then a page containing a new subset of items is displayed, and if the new subset contains the item at the start or at the end of the list, then the highlighted additional icon disappears and the other additional icon is highlighted.

2. Method according to Claim 1, **characterized in that** it comprises a step of displaying a menu showing a plurality of functions modifying the sub-set of items.

3. Method according to Claim 1, **characterized in that** following the reception of the command of validation, the additional icon remains highlighted enabling a page jump to be made on receiving a new command of validation.

4. Method according to any one of the preceding claims, **characterized in that** the selected additional icon (20) disappears when, after receiving a command of validation, the item at one end of the list is selected.

5. Method according to any one of the preceding claims, **characterized in that** the display step comprises the insertion of an additional icon (20) between a specified number of icons identifying the items.

6. Electronic device (1) comprising a means for producing a display signal (3, 11, 12) on a display screen of a series of icons representing a sub-set of a list of ordered items, each displayed icon being identified by a displayed item, a means of receiving a command to move a curser (8, 13) triggering the selection of an item by graphically highlighting the icon of the identified element and a means of triggering the execution of a function applied only to the selected item,
**characterized in that** it also comprises a means of producing a display signal (3, 11, 12) of two additional icons (20) each associated with a page jump function and at least one other additional function concerning the displayed list set, each of the two icons being placed at each end of the sub-set of displayed items,
the means of receiving a command to move a curser (8, 13) controlling the means to produce a display signal (3, 11, 12) to highlight one of the additional icons and display and highlight an identifier of one of said additional functions associated with the additional icon (20) following a specified period during which no other command is received, the means of receiving a command (8,13) also controlling a means of executing the function whose identifier is highlighted,
the means of receiving a command (8, 13) triggering, when a validation command is received during the specified period, the display of a page containing a new subset of items, and if the new subset contains the item at the start or the item at the end of the list, then the means of producing a display signal (3, 11, 12) removes the highlighted additional icon and highlights the other additional icon.

7. Electronic device (1) according to Claim 6; **characterized in that** the means of producing a display signal (3, 11, 12) graphically maintains the additional icon highlighted after receiving the command, enabling a new page jump to be performed at each reception of a new command.

8. Electronic device (1) according to either of the Claims 6 or 7; **characterized in that** the means of producing a display signal (3, 11, 12) inserts an additional icon (20) between a specified number of icons identifying the items.

## Patentansprüche

1. Verfahren zur Auswahl von Elementen und Funktionen einer an einem Anzeigebildschirm angezeigten Liste, wobei jedes Element durch ein Ikon identifiziert ist, das in einer Ikonfolge angezeigt ist, die eine Untermenge einer geordneten Elementenliste darstellt, mit einem Schritt des Auswählens eines Elements, der durch den Empfang eines ersten Befehls (8, 13) zum Bewegen eines Cursors, so dass das zugehörige Ikon grafisch hervorgehoben wird, ausgelöst wird, und einem Schritt des Ausführens einer auf das ausgewählte Element angewendeten Funktion, der durch den Empfang eines zweiten Validierungsbefehls (8, 13) ausgelöst wird, **dadurch gekennzeichnet, dass** es ferner umfasst:
- einen Schritt des Anzeigens zweier zusätzlicher Ikone (20), die jeweils einer Seitenwechselfunktion und mindestens einer zusätzlichen Funktion, die die gesamte angezeigte Liste betrifft, zugeordnet sind, wobei jedes der beiden Ikone an jedem Ende der Untermenge von angezeigten Elementen angeordnet ist,
- einen Schritt des Hervorhebens eines der zusätzlichen Ikone (20), der durch den Empfang eines dritten Befehls zum Bewegen des Cursors ausgelöst wird,
- einen Schritt des Anzeigens und des Hervorhebens der Kennung mindestens einer der zusätzlichen, dem zusätzlichen Ikon (20) zugeordneten Funktionen am Ende einer bestimmten Dauer, während deren kein weiterer Befehl empfangen wird, wobei
- wenn ein vierter Validierungsbefehl vor dem Ende der bestimmten Dauer empfangen wird, dann eine eine neue Untermenge von Elementen enthaltende Seite angezeigt wird, und, wenn die neue Untermenge das Element am Anfang oder das Element am Ende der Liste enthält, dann das hervorgehobene zusätzliche Ikon verschwindet und das andere zusätzliche Ikon hervorgehoben wird.

2. Verfahren nach Anspruch 1, **dadurch gekennzeichnet, dass** es einen Schritt des Anzeigens eines Menus mit einer Vielzahl von Funktionen zum Verändern der Untermenge von Elementen aufweist.

3. Verfahren nach Anspruch 1, **dadurch gekennzeichnet, dass** nach dem Empfang des Validierungsbefehls das zusätzliche Ikon hervorgehoben bleibt, wodurch ein Seitenwechsel bei dem Empfang eines neuen Validierungsbefehls erfolgen kann.

4. Verfahren nach einem der vorhergehenden Ansprüche, **dadurch gekennzeichnet, dass** das ausgewählte zusätzliche Ikon (20) verschwindet, wenn nach dem Empfang eines Validierungsbefehls das Element an einem Ende der Liste ausgewählt wird.

5. Verfahren nach einem der vorhergehenden Ansprüche, **dadurch gekennzeichnet, dass** der Schritt des Anzeigens das Einfügen eines zusätzlichen Ikons (20) in eine bestimmte Anzahl von Elemente identifizierenden Ikonen umfasst.

6. Elektronischer Apparat (1) mit einem Mittel zum Erstellen eines Signals (3, 11, 12) zum Anzeigen einer Ikonfolge an einem Anzeigebildschirm, welche eine Untermenge einer geordneten Liste von Elementen darstellt, wobei jedes Element durch ein angezeigtes Ikon identifiziert wird, einem Mittel zum Empfangen eines Befehls (8, 13) zum Bewegen eines Kursors, welcher Befehl die Auswahl eines Elements auslöst und dabei das Ikon des identifizierten Elements grafisch hervorhebt, und einem Mittel zum Auslösen der Ausführung einer lediglich auf das ausgewählte Element angewendeten Funktion, **dadurch gekennzeichnet, dass** er ferner ein Mittel zur Erstellung eines Signals (3, 11, 12) zum Anzeigen zweier zusätzlicher Ikone (20), die jeweils einer Seitenwechselfunktion und mindestens einer zusätzlichen Funktion, die die gesamte angezeigte Liste betrifft, zugeordnet sind, wobei jedes der beiden Ikone an jedem Ende der Untermenge von angezeigten Elementen angeordnet ist, wobei das Mittel zum Empfangen eines Befehls (8, 13) zum Bewegen des Cursors das Mittel zum Erstellen eines Anzeigesignals (3, 11, 12) kontrolliert, um eines der zusätzlichen Ikone hervorzuheben und um eine Kennung einer der zusätzlichen, dem zusätzlichen Ikon (20) zugeordneten Funktionen am Ende einer bestimmten Dauer, während deren kein weiterer Befehl empfangen wird, anzuzeigen und hervorzuheben, wobei das Mittel zum Empfangen eines Befehls (8, 13) ebenfalls ein Mittel zum Ausführen der Funktion, deren Kennung hervorgehoben ist, kontrolliert, wobei das Mittel zum Empfangen eines Befehls (8, 13) beim Empfang eines Validierungsbefehls während der bestimmten Dauer die Anzeige einer eine neue Untermenge von Elementen enthaltenden Seite auslöst, und, wenn die neue Untermenge das Element am Anfang oder das Element am Ende der Liste enthält, dann das Mittel zum Erstellen eines Anzeigesignals (3, 11, 12) das hervorgehobene zusätzliche Ikon verschwinden lässt und das andere zusätzliche Ikon hervorhebt.

7. Elektronischer Apparat (1) nach Anspruch 6, **dadurch gekennzeichnet, dass** das Mittel zum Erstellen eines Anzeigesignals (3, 11, 12) das zusätzliche Ikon nach dem Empfang des Befehls grafisch hervorgehoben hält, wodurch ein neuer Seitenwechsel bei jedem Empfang eines neuen Befehls erfolgen kann.

8. Elektronischer Apparat (1) nach einem der Ansprüche 6 oder 7, **dadurch gekennzeichnet, dass** das Mittel zum Erstellen eines Anzeigesignals (3, 11, 12) ein zusätzliches Ikon (20) in eine bestimmte Anzahl von Elemente identifizierenden Ikonen einfügt.
